# EUROPÄISCHE PATENTSCHRIFT

(11) **EP 1 399 857 B1**
(45) Veröffentlichungstag und Bekanntmachung des Hinweises auf die Patenterteilung: **06.08.2008**
(21) Anmeldenummer: 02750800.1
(22) Anmeldetag: 25.06.2002
(51) Int. Cl.: G06F 17/30

(54) **VERFAHREN ZUM SCHNELLEN SUCHEN VON ELEMENTEN ODER ATTRIBUTEN ODER ZUR SCHNELLEN FILTERUNG VON FRAGMENTEN IN BINÄREN REPRÄSENTATIONEN VON STRUKTURIERTEN DOKUMENTEN**
METHOD FOR RAPIDLY SEARCHING ELEMENTS OR ATTRIBUTES OR FOR RAPIDLY FILTERING FRAGMENTS IN BINARY REPRESENTATIONS OF STRUCTURED DOCUMENTS
PROCEDE PERMETTANT UNE RECHERCHE RAPIDE D'ELEMENTS OU D'ATTRIBUTS, OU UN FILTRAGE RAPIDE DE FRAGMENTS DANS DES REPRESENTATIONS BINAIRES DE DOCUMENTS STRUCTURES

(30) Priorität: 25.06.2001 DE 10130525; 14.03.2002 DE 10211385
(43) Veröffentlichungstag der Anmeldung: 24.03.2004
(73) Patentinhaber: SIEMENS AKTIENGESELLSCHAFT, 80333 München (DE)
(72) Erfinder: HUTTER, Andreas, 81539 München (DE); HEUER, Jörg, 81539 München (DE)
(86) Internationale Anmeldenummer: PCT/DE2002/002308
(87) Internationale Veröffentlichungsnummer: WO 2003/001404

(56) Entgegenhaltungen:
- "TEXT OF ISO/IEC FCD 15938-1 INFORMATION TECHNOLOGY - MULTIMEDIA CONTENT DESCRIPTION INTERFACE - PART 1 SYSTEMS" ISO/IEC JTC1/SC29/WG11 MPEG01/N4001, XX, XX, März 2001 (2001-03), Seiten 1-2,I-V,6-58, XP001001465 in der Anmeldung erwähnt
- MCHUGH J ET AL: "Indexing Semistructured Data" TECHNICAL REPORT, [Online] 1998, XP002248313 Stanford University , Computer Science Department Gefunden im Internet: <URL:http://www-db.stanford.edu/lore/pubs/ data.html> [gefunden am 2003-07-18]
- "XML Path Language (XPath) Version1.0" W3C RECOMMENDATION, 16. November 1999 (1999-11-16), XP002219530 Gefunden im Internet: <URL:http://xml.etimesi.com/storage/spec_X Path(v1.0).pdf> [gefunden am 2002-11-05] in der Anmeldung erwähnt
- GOLDMAN R AND WIDOM J: "DataGuides: Enabling Query Formulation and Optimization in Semistructured Databases" 23RD INTERNATIONAL CONFERENCE ON VERY LARGE DATABASES, 26. - 29. August 1997, Seiten 436-445, XP002248314 Athens, Greece

## Beschreibung

Die Erfindung betrifft Verfahren, bei denen basierend auf textuellen Pfadausdrücken strukturierte, zum Beispiel XMLbasierte oder SGML-basierte, Dokumente abgefragt werden. Textuelle Pfade sind beispielsweise Kontextpfade, wie sie beispielsweise in [1] beschrieben sind oder aber textuelle Pfadangaben, wie sie beispielsweise in [2] spezifiziert sind zur Indexierung und Abfrage von strukturierten, zum Beispiel XML-basierten, Dokumenten.

Aus [3] ist ein System bekannt, in dem textuelle Pfade genutzt werden, um den Inhalt eines XML-Dokuments zu indexieren. Hier werden absolute Pfade und Teilpfade zu jedem Element eines Dokuments, beispielsweise in einer Hash-Tabelle, gespeichert. Diese Elemente werden dann basierend auf der Speicheradresse im gespeicherten Dokument referenziert.

Aus [4] ist ferner eine Abfragesprache bekannt, die basierend auf textuellen Pfadausdrücken Anfragen, beispielsweise an eine Datenbank, formulieren kann.

Aus der MCHUH J ET AL: "Indexing Semistructured Data" TECHNICAL REPORT, 1998, XP00224813 Stanford University, Computer Science Department, ist ein Verfahren zur schnellen Suche von Elementen in semi-strukturierten Dokumenten bekannt, bei dem ein Pfad zur Indizierung von Elementen und/oder Attributen codiert wird und der codierte Pfad eindeutig an dessen Bitmuster erkannt und damit die gesuchten Elemente und/oder Attribute im semi-strukturierten Dokument aufgefunden werden.

Die der Erfindung zugrundeliegende Aufgabe besteht nun darin, Verfahren zum Suchen von Elementen in binären Repräsentationen von XML-basierten Dokumenten anzugeben, die besonders schnell und codeeffizient sind.

Diese Aufgabe wird hinsichtlich der schnellen Suche von Elementen durch die Merkmale des Anspruchs 1 gelöst.

Die weiteren Ansprüche betreffen vorteilhafte Ausgestaltungen der erfindungsgemäßen Verfahren.

Die Erfindung betrifft im Wesentlichen ein Verfahren zur Codierung von textuellen Pfaden zur Indexierung und Abfrage von strukturierten, zum Beispiel XML-basierten, Dokumenten sowie zur verbesserten Filterung von binär repräsentierten XML-Dokumenten. Durch das Verfahren wird bewirkt, dass die Indizes auch für den Fall identisch sind, in denen Polymorphismus eingesetzt wird. Bei der Speicherung dieser textuellen Pfade zur Indexierung bzw. Abfrage muss nur eine geringere Datenmenge gespeichert bzw. übertragen werden. Folglich kann auch ein Vergleich dieser Daten bei einer Abfrage schneller erfolgen, weil die zu vergleichende Datenmenge geringer ist.

Die Erfindung wird nachfolgend anhand von in den Zeichnungen dargestellten Ausführungsbeispielen erläutert. Dabei zeigt
- Figur 1A bis 1C: die Struktur eines codierten Pfads, eines verlustbehafteten codierten Teilpfads und eines verlustfreien Teilpfades und
- Figur 2A und 2B: eine grafische Darstellung eines absoluten Pfads und eines Teilpfads.

Wie eingangs beschrieben, können textuelle Pfade dazu benutzt werden, um den Inhalt eines XML-basierten Dokuments zu indexieren, um einen schnelleren Zugriff auf die Daten zu ermöglichen.

Bei dem erfindungsgemäßen Verfahren werden textuelle Pfade zur Indexierung entweder zu Beginn eines XML-basierten Dokuments bzw. am Beginn einer entsprechenden Übertragung oder aber wiederholt übertragen.
Im erfindungsgemäßen Verfahren werden textuelle Pfade, wie sie in der Indexierung und der Abfrageformulierung spezifiziert werden, ähnlich wie die Inhalte von strukturierten Dokumenten, also ähnlich wie in [1] ausgeführt, codiert.

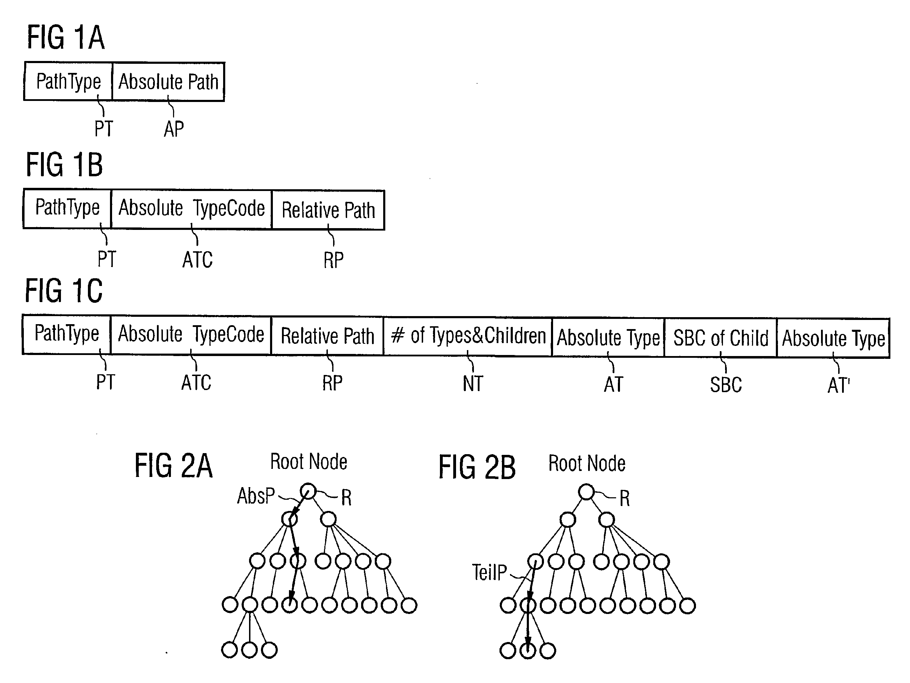

In Figur 1A ist eine erfindungsgemäße Codierung eines absoluten Pfads, in Figur 1B die Figur eines verlustbehafteten Teilpfads und in Figur 1C die erfindungsgemäße Codierung eines verlustfreien Teilpfads prinzipiell dargestellt.

Zur Unterscheidung dieser drei Pfadtypen wird zu Beginn eines jeden der drei beispielhaft angegebenen Codes ein Pfadtyp PT mit zwei Bit signalisiert.

Wenn ein von einem Wurzelknoten einer zugrundeliegenden Datenstruktur ausgehender Pfad zur Indexierung möglich ist, kann eine Codierung, wie in Figur 1A gezeigt, nur durch Angabe des Pfadtyps PT als absoluter Pfad gefolgt von dem absoluten Pfad AP erfolgen. In Figur 2A ist ein solcher von einem Wurzelknoten R ausgehender absoluter Pfad AbsP gezeigt. Erwähnenswert ist hierbei, dass eine Pfadcodierung ausschließlich mit Schemaverzweigungscodes SBC und Baumverzweigungscode TBC zugelassen ist, obwohl beispielsweise gemäß der Definition in [1] sogenannte Positioncodes eingefügt werden müssten.

In Figur 2B ist eine baumartige Datenstruktur mit einem Teilpfad TeilP gezeigt, der sich von einem absoluten Pfad dadurch unterscheidet, dass er nicht von einem Wurzelknoten R ausgeht. Im Fall der Teilpfadcodierung wird der erste Knoten im Pfad nur durch den Typcode in Bezug auf einen generellen Basistyp, beispielsweise den Urtyp, spezifiziert, das heißt, es wird, wie in Figur 1B gezeigt, nach der Angabe des Pfadtyps PT ein absoluter Typcode ATC codiert. Der restliche Pfad kann dann durch Angabe eines relativen Pfads RP wie in [1] angegeben und gegebenenfalls wie im ersten Fall angegeben modifiziert codiert werden. Diese Codierung des Pfades ist jedoch verlustbehaftet, da der erste Knotennamen nicht bestimmt werden kann, sondern nur der Datentyp. In vielen Anwendungsfällen ist dies jedoch nicht von Bedeutung.

Eine verlustfreie Codierung unter Beibehaltung der beschriebenen Eigenschaften kann jedoch durch die in Figur 1C dargestellte Codierung erreicht werden, bei der zusätzlich zu den Angaben des Pfadtyps PT, des absoluten Typcodes ATC und des relativen Pfades RP eine Anzahl N der Typen bzw. Kindelemente gefolgt von mindestens einem absoluten Typ AT oder einem Tupel aus einem absoluten Typ AT und einem Schemaverzweigungscode SBC eines Kindelementes vorhanden sind. Die Anzahl NT gibt die Anzahl der Knoten an, die den angegebenen Teilpfad ausgehend von einem Kindelement enthalten können. Die Typcodes dieser Knotentypen AT, AT',... beziehen sich auf denselben Basistyp und sind beispielsweise entsprechend der Codes in aufsteigender Reihenfolge geordnet. Durch die Angabe der Schemaverzweigungscodes SBC,.. können bestimmte Kindelemente, von denen der Teilpfad ausgeht, signalisiert werden, wenn mehrere Kindelemente vom Typ mit dem absoluten Typcode ATC des Teilpfades TeilP deklariert sind.

Eine Codierung der Pfade in einem Index nach dem erfindungsgemäßen Verfahren ist vorteilhaft, da bei der Indexierung oft keine Decodierung oder nur eine Transcodierung von codiert übermittelten Dokumenten notwendig ist. Des weiteren kann der Speicherbedarf für den Index verringert werden, was eine schnellere Ausführung von Abfragen ermöglicht bzw. einen geringeren Rechenaufwand bedeutet.

Eine Codierung der Pfade in Abfragen von Datenbeständen ist vorteilhaft, da die übertragene Datenmenge von der Vorrichtung, die die Abfrage aufnimmt, zu der Vorrichtung, die die Abfrage bearbeitet, verringert werden kann. Zudem muss die Vorrichtung, die die Abfrage bearbeitet, diese nicht decodieren, wenn ein Index nach der obigen Ausführung gespeichert ist. Dies ermöglicht eine schnellere Ausführung der Abfrage.

Durch das erfindungsgemäße Verfahren können textuelle Pfadausdrücke effizient binär codiert werden und es wird eine Suche durch einen Bitmustervergleich ermöglicht.

In einer vorteilhaften Ausgestaltung des erfinderischen Verfahrens werden textuelle Pfade zur Indizierung von Elementen und/oder Attributen derart codiert, dass die im Pfad instanziierten, durch Polymorphismus abgeleiteten Datentypen in eindeutiger Weise durch normierte Datentypen ersetzt werden, wobei ein jeweiliger normierter Datentyp dadurch festgelegt wird, dass ausgehend vom Basisdatentyp des jeweiligen Datentyps ein Datentyp gesucht wird, der das im Pfad folgende Element oder Attribut enthält und im Bezug auf dessen Ableitung vom Basistypen eindeutig zu bestimmen ist. Dadurch wird der codierte textuelle Pfad eindeutig an dessen Bitmuster erkannt und es können damit die gesuchten Elemente und/oder Attribute im codierten, XML-basierten Dokument aufgefunden werden.

Diese Normierung kann allgemein auf textuelle Pfade, also nicht nur auf textuelle Pfade zur Indizierung, sondern auch auf Kontextpfade, wie sie in [1] beschrieben sind, zur Codierung angewendet werden. Der Vorteil dieser Normierung liegt darin begründet, dass gleiche textuelle Pfade unterschiedlicher Dokumente auf eine einzige binäre Repräsentation normiert werden, selbst dann, wenn sich die im Pfad enthaltenen Knoten im Dokument vom Datentyp unterscheiden. Daher muss bei der Suche nach textuellen Pfaden mit Hilfe von Bitmustern der codierten Pfade nur noch ein einziges Bitmuster pro Pfad berücksichtigt werden. Schließlich liegt ein weiterer Vorteil darin, dass die resultierenden Bitmuster in der Regel kürzer sind als entsprechende nicht normierte Bitmuster. Durch die Normierung der oben erwähnten Kontextpfade wird aus obigen Gründen auch eine schnellere Filterung von Fragmenten in binären Repräsentationen von XML-basierten Dokumenten hinsichtlich textueller Pfade erreicht. Dies hat den Vorteil, das die Kontextpfade und hiermit die in einem Fragment enthaltenen Informationen schnell gefiltert werde können, ohne dass dabei mehrere Bitmuster für die durch Polymorphismus sich unterscheidenden Datentypen verglichen werden müssen.

In diesem Dokument ist folgende Literatur zitiert:
[1] "ISO/IEC FCD 15938-1 Information technology - Multimedia content description interface: Systems", / 7, ISO/IEC JTC 1 SC29/WG11/N4001, Singapur, März 2001
[2]XML Path Language, Version 1.0, W3C Recommendation, 16 November 1999, http://www.w3.org/TR/xpath.
[3]dbXML - XML Database Application Server, Version 0.4, The dbXML Group, 2000, http://www.dbxml.org/docs/CoreSpecs.pdf.
[4]J. Robie, J. Lapp, D. Schach, XML Query Language (XQL), 1998, http://www.w3.org/TandS/QL/QL98/pp/xql.html.
[5]XML Schema Language, XML Schema Part 1: Structures, §6, W3C Recommendation, 2 May 2001 http://www.w3.org/XML/Schema

## Patentansprüche

1. Verfahren zum schnellen Suchen von Elementen in binären Repräsentationen von strukturierten XML-basierten Dokumenten, bei dem ein textueller Pfad (AbsP, TeilP) mit Knoten zur Indexierung von Elementen und/oder Attributen derart mit Hilfe von Baumverzweigungscodes (TBC) und Schemaverzweigungscodes (SBC) codiert wird, dass
a) abgeleitete Datentypen der im Pfad enthaltenen, polymorphen Knoten in eindeutiger Weise durch normierte Datentypen ersetzt werden,
b) wobei ein jeweiliger normierter Datentyp dadurch festgelegt wird, dass ausgehend vom Basisdatentyp des jeweiligen Datentyps ein Datentyp gesucht wird, der das im Pfad folgende Element oder Attribut enthält und der den niedrigsten beziehungsweise den höchsten Typcode oder die niedrigste beziehungsweise höchste Anzahl von Vererbungsschritten vom Basistypen ausgehend aufweist, und
c) bei dem dann der codierte textuelle Pfad eindeutig an dessen Bitmuster erkannt und damit die gesuchten Elemente und/oder Attribute im codierten, XML-basierten Dokumenten aufgefunden werden.

## Claims

1. Method for fast searching for elements in binary representations of structured XML-based documents,
wherein a textual path (AbsP, TeilP) containing nodes for indexing elements and/or attributes is encoded with the aid of tree branch codes (TBC) and schema branch codes (SBC) in such a way that
a) derived data types of the polymorph nodes contained in the path are uniquely replaced by normalised data types,
b) wherein a particular normalised data type is specified such that, starting from the basic data type of the respective data type, a search is conducted for a data type which contains the element or attribute following in the path and which has the lowest or highest type code or the lowest or highest number of inheritance steps starting from the basic type, and
c) wherein the encoded textual path is then uniquely recognised by its bit pattern and accordingly the searched elements and/or attributes are located in the encoded XML-based document.

## Revendications

1. Procédé pour rechercher rapidement des éléments dans des représentations binaires de documents structurés basés sur XML, dans lequel un chemin textuel (AbsP, TeilP) est codé avec des noeuds pour l'indexation d'éléments et/ou d'attributs à l'aide de codes de ramification d'arbre (TBC) et de codes de ramification de schéma (SBC) de telle sorte que
a) des types de données dérivés des noeuds polymorphes, contenus dans le chemin, sont remplacés de façon claire par des types de données normalisés,
b) un type de données normalisé respectif étant défini par le fait que, à partir du type de données de base du type de donnée respectif, on recherche un type de données qui contient l'élément ou l'attribut suivant dans le chemin et qui présente le code de type le plus faible ou le plus élevé ou le nombre le plus faible ou le plus élevé d'incréments d'hérédité à partir du type de base, et
c) dans lequel le chemin textuel codé est détecté ensuite clairement par son modèle de bit et ainsi les éléments et/ou attributs recherchés sont trouvés dans le document codé, basé sur XML.
